# FASCICULE DE BREVET EUROPEEN

(11) **EP 2 868 582 B1**
(45) Date de publication et mention de la délivrance du brevet: **23.03.2016**
(21) Numéro de dépôt: 14003424.0
(22) Date de dépôt: 06.10.2014
(51) Int. Cl.: B64D 37/04

(54) **Giravion équipé de réservoirs à carburant montés par suspension sous un plancher médian travaillant du fuselage du giravion**
Drehflügelflugzeug, das mit Kraftstofftanks ausgestattet ist, welche hängend unter einem lasttragenden Zwischenboden des Drehflügelflugzeugrumpfs montiert sind
Rotorcraft provided with suspended fuel tanks mounted under a load carrying median floor of the fuselage of the rotorcraft

(30) Priorité: 05.11.2013 FR 1302559
(43) Date de publication de la demande: 06.05.2015
(73) Titulaire: Airbus Helicopters, 13725 Marignane Cedex (FR)
(72) Inventeur: Bistuer, Olivier, F-13580 LA Fare LES Oliviers (FR); Mougin, Stéphane, F-13790 Rousset (FR); Klos, Sébastien, F-13127 Vitrolles (FR)
(74) Mandataire: GPI & Associés

(56) Documents cités:
- FR-A1- 2 756 255
- US-A- 3 966 147
- US-A- 5 377 934
- US-A- 5 451 015

## Description

La présente invention est du domaine des aménagements relatifs à l'installation à bord d'un giravion d'une réserve de carburant dédiée à l'alimentation en carburant d'au moins un moteur à combustion équipant le giravion. La présente invention relève plus particulièrement des modalités de montage à bord d'un giravion de poches formant des réservoirs à carburant installés en soubassement du fuselage du giravion.

Les giravions sont des aéronefs à voilure(s) tournante(s) équipés d'au moins un rotor principal à axe sensiblement vertical, voire aussi d'au moins un rotor à axe sensiblement horizontal tel qu'un rotor de queue ou une hélice propulsive. Le ou les rotors d'un giravion sont classiquement entraînés en rotation par un groupe de motorisation comprenant un ou plusieurs moteurs à combustion, turbomoteurs notamment.

Le ou les moteurs sont individuellement alimentés en carburant par des circuits hydrauliques respectifs. Pour chaque circuit hydraulique, le carburant est acheminé vers un moteur depuis un réservoir de carburant installé à bord du giravion et affecté à l'alimentation en carburant d'un moteur donné.

Plus particulièrement, un groupe d'alimentation en carburant d'un groupe de motorisation équipant un giravion comprend un ou plusieurs ensembles d'alimentation en carburant. Dans le cas d'un giravion monomoteur, un ensemble d'alimentation en carburant est affecté au moteur unique équipant le giravion. Dans le cas d'un giravion à plusieurs moteurs, tel qu'un giravion bimoteur par exemple, les ensembles d'alimentation en carburant sont respectivement affectés à chacun des moteurs pour leurs mises en fonctionnement autonome.

Pour un ensemble d'alimentation en carburant donné, celui-ci comprend principalement un réservoir à carburant et une nourrice réservant une quantité minimale de carburant. Selon les modalités d'implantation du réservoir à bord du giravion, le réservoir est susceptible de comprendre une poche unique ou d'être composé d'une pluralité de poches distinctes placées en communication fluidique entre elles. La nourrice est formée d'une enceinte qui est indépendante au regard d'une libre communication fluidique du carburant depuis le réservoir vers la nourrice. La capacité de la nourrice est limitée à ce qui est au moins nécessaire à la poursuite du vol pendant une durée prédéterminée en cas de défaillance du giravion.

Le circuit hydraulique d'alimentation en carburant de l'organe moteur prélève le carburant à l'intérieur de la nourrice pour l'acheminer vers le moteur qui lui est affecté par une pompe d'alimentation intégrée au groupe de motorisation et entraînée par le moteur, et/ou éventuellement au moyen d'au moins une pompe de gavage plongée dans la nourrice. La nourrice est alimentée en carburant depuis le réservoir par un circuit hydraulique d'approvisionnement, mettant en oeuvre une pompe d'approvisionnement associée à un éjecteur plongé dans le réservoir. Une telle pompe d'approvisionnement est potentiellement formée par une dite pompe de gavage. Un dispositif de trop plein restitue par débordement vers le réservoir l'excès de carburant hors de la nourrice.

Par ailleurs dans le cas d'un giravion à multiples moteurs alimentés en carburant par des ensembles d'alimentation en carburant respectifs, les différents réservoirs sont placés en communication fluidique entre eux par un circuit de transfert du carburant d'un réservoir à l'autre. Un tel circuit de transfert met notamment en oeuvre une pompe de transfert, qui peut être mise en oeuvre pour équilibrer les quantités de carburant respectivement contenues dans les différents réservoirs et/ou afin de permettre une exploitation de la totalité du carburant embarqué pour alimenter en carburant un quelconque moteur depuis le réservoir qui lui est affecté.

On pourra par exemple se reporter au document EP2567896 (EUROCOPTER FRANCE), qui décrit un tel groupe d'alimentation en carburant d'un groupe de motorisation équipant un giravion.

Il se pose le problème de l'installation et de la maintenance du groupe d'alimentation en carburant. Il est bien évidemment à prendre en compte non seulement l'agencement et les modalités d'exploitation propres de la réserve de carburant, mais aussi les modalités d'agencement et de fonctionnement des différents organes que comprend un tel groupe d'alimentation en carburant.

Selon une solution connue telle que décrite par le document US5451015 (BELL HELICOPTER TEXTRON INC), un compartiment logeant la réserve de carburant est ménagé à l'arrière du poste de pilotage du giravion à l'aplomb de l'axe de rotation du rotor principal.

Selon une autre solution connue telle que décrite par les documents FR2756255 (EUROCOPTER FRANCE), US5377934 (JAMIE R. HILL) et EP2567896 (EUROCOPTER FRANCE), la réserve de carburant est stockée dans des poches à carburant disposées dans des compartiments respectifs ménagés en soubassement, ou barque, du fuselage du giravion. Les différentes poches à carburant d'un même dit ensemble d'alimentation en carburant sont en libre communication fluidique entre elles par des aménagements spécifiques communément désignés par « intercommunication ».

Selon cette configuration d'implantation de la réserve à carburant, les différentes poches à carburant d'un ou de plusieurs réservoirs sont placées sous un plancher technique de séparation entre la barque et l'habitacle du giravion. Un tel plancher technique est soutenu selon diverses modalités de montage par une armature fixée au fuselage du giravion, en ménageant un plan de chargement à l'intérieur de l'habitacle du giravion disposé en surplomb des compartiments de réception des poches à carburant.

Plus particulièrement, de tels planchers techniques d'aéronef sont couramment fixés sur des organes porteurs montés sur le fuselage de l'aéronef. De tels organes porteurs sont par exemple formés de poutres, de traverses et/ou jambes de soutien soutenues par le fuselage. On pourra par exemple se reporter à ce propos aux documents FR2933065 (AIBUS France SAS), FR2957050 (EADS France), FR2984273 (AEROLIA SAS) et FR2947524 (AIRBUS OPERATONS SAS), qui décrivent diverses modalités de montage d'un tel plancher technique à bord d'un aéronef.

La solution d'un placement des réservoirs dans la barque d'un giravion permet de disposer d'un volume d'installation de la réserve de carburant conséquent. La quantité de carburant embarqué est avantageusement optimisée tout en bénéficiant d'un équilibrage naturel de la masse de carburant embarqué par rapport à l'axe de rotation du rotor principal du giravion procurant essentiellement sa sustentation. Une telle recherche constante d'embarquement à bord d'un giravion d'une quantité de carburant optimisée est évoquée par le document US3966147 (GRUMMAN AEROSPACE CORP.).

En outre, un avantage du placement des réservoirs dans la barque d'un giravion permet d'éloigner au mieux les réservoirs par rapport au groupe de motorisation. Ces dispositions permettent de sécuriser au mieux le giravion au regard de l'emport du carburant qui se trouve placé à distance d'une zone sensible du giravion dans laquelle est implanté le rotor principal du giravion et le groupe de motorisation qui génère de la chaleur.

Il est aussi connu d'implanter des réservoirs à carburant latéralement à l'extérieur du fuselage d'un giravion en étant portés par le fuselage. On pourra par exemple se reporter à ce propos au document US4860972 (ERA AVIAT. INC) et au document US3966147 (GRUMMAN AEROSPACE CORP.) précédemment mentionné.

Cependant d'une manière générale, l'installation et la maintenance de la réserve de carburant à l'intérieur du fuselage d'un giravion restent délicates. En effet, le volume utile du giravion exploité pour le transport des personnes et du fret est recherché optimal, au détriment d'un accès aisé aux compartiments ménageant des locaux techniques tels que ceux logeant la réserve de carburant. En conséquence, les compartiments de réception des poches à carburant sont souvent difficilement accessibles par un opérateur.

On pourra à ce propos se reporter au document US5371935 (UNITED TECH. CORP) qui se rapporte à de telles difficultés d'accès à des compartiments de réception de poches à carburant, voire encore au document précédemment mentionné US3966147 (GRUMMAN AEROSPACE CORP.) qui propose d'éviter de telles difficultés d'accès en montant des réservoirs à carburant principaux latéralement à l'extérieur du fuselage.

En fait, l'aisance d'accès aux compartiments de réception des poches à carburant est conditionnée par la structure même du fuselage du giravion. En effet, les fuselages de giravion sont essentiellement formés d'organes raidisseurs d'un revêtement agencés et fixés entre eux en conférant au fuselage une conformation désirée. Les organes raidisseurs et plus ou moins localement le revêtement sont travaillants mécaniquement vis-à-vis des efforts généraux supportés par le fuselage.

Pour conformer le fuselage, des organes raidisseurs transversaux chacun conformés en cadre délimitent localement le profil transversal du fuselage. De tels cadres, pouvant être de structures et de conformations distinctes, sont typiquement disposés à distance les uns des autres suivant l'extension longitudinale du fuselage entre l'avant et l'arrière de l'aéronef. Des raidisseurs longitudinaux, tels que des profilés pliés ou filés désignés par lisses ou par longerons, stabilisent le revêtement et l'ossature du fuselage.

Classiquement, lesdits efforts généraux supportés par le fuselage sont entre autres générés au moins par la portance et la propulsion du giravion. Un plancher supérieur travaillant est ancré sur au moins deux cadres médians délimitant longitudinalement un tronçon médian du fuselage interposé entre un poste de pilotage et une poutre de queue du giravion. Le plancher supérieur forme une paroi supérieure du fuselage, au moins en partie le long dudit tronçon médian, et supporte le rotor principal via une boîte de transmission de puissance principale ainsi qu'au moins en partie le groupe de motorisation.

Classiquement encore dans le cas où la réserve de carburant est logée en soubassement du fuselage du giravion, lesdits efforts généraux supportés par le fuselage sont potentiellement générés par la masse du carburant contenue dans les poches à carburant. Il en ressort que les poches à carburant sont classiquement soutenues par la face inférieure du giravion, ou ventre du giravion, formée par le revêtement du fuselage.

Dans ce contexte, il est nécessaire de ménager des trappes dans le plancher technique pour permettre à un opérateur d'accéder aux compartiments ménagés dans la barque du giravion pour la réception des réservoirs à carburant. Cependant, l'usage de telles trappes est malaisé et il doit être prévu des dispositions particulières pour faciliter l'accès aux réservoirs par un opérateur, tel que par exemple à la manière décrite par le document US5371935 (UNITED TECH. CORP).

Par ailleurs, un inconvénient de loger les réservoirs dans la barque du fuselage réside dans les difficultés d'implantation des différents passages du carburant, tels que d'un réservoir à l'autre, d'une poche à l'autre d'un même réservoir et/ou entre les nourrices et les réservoirs qui leur sont respectivement affectés.

En effet, de tels passages du carburant impliquent une fragilisation des cadres à travers lesquels doivent être ménagés lesdits passages. Les cadres devant être structurés pour pouvoir procurer la résistance souhaitée du fuselage vis-à-vis des efforts généraux auxquels il est soumis, leur fragilisation nécessite des dispositions particulières de renforcement des cadres avec en conséquence un accroissement de leur masse et une complexification de leur structure.

Par ailleurs, il doit être pris en compte une situation de crash du giravion pour protéger le personnel et les biens embarqués à bord du giravion. L'installation des réservoirs dans des compartiments du fuselage du giravion rend difficile une telle protection, tel qu'évoqué par le document précédemment mentionné US3966147 (GRUMMAN AEROSPACE CORP.).

Il doit aussi être pris en compte la recherche constante en aéronautique d'une simplification des équipements d'un aéronef, en vue notamment de réduire leur masse et de simplifier les opérations de maintenance.

Il est bien évidemment compris que les notions de « vertical », de « horizontal », de « longitudinal », de « transversal », « avant », « arrière », « inférieur », « supérieur » et de « surplomb », sont des notions relatives qui sont à apprécier vis-à-vis de la station du giravion au sol et de l'extension longitudinale du fuselage entre l'avant et l'arrière du giravion. De telles notions sont communément identifiées par l'homme du métier.

Par ailleurs dans le contexte d'un fuselage de giravion, les notions de « travaillant » et de « non travaillant » sont des notions de qualification d'organes courantes pour l'homme du métier, de telles notions qualifiant des organes du fuselage travaillant ou non vis-à-vis des efforts généraux auxquels le fuselage est soumis.

Il apparaît que l'organisation et les modalités d'implantation à bord d'un giravion d'un groupe d'alimentation en carburant d'un ou de plusieurs moteurs équipant le giravion, impliquent une recherche permanente pour l'homme du métier qui est confronté à une multitude de problèmes à résoudre et de difficultés à surmonter. L'homme du métier est en recherche permanente de solutions procurant un compromis satisfaisant entre les différents inconvénients et avantages liés à ces solutions.

La présente invention a pour objet un giravion équipé d'un groupe d'alimentation en carburant d'un groupe de motorisation du giravion comprenant au moins un moteur à combustion.

Le but de la présente invention s'inscrit dans la recherche du compromis susvisé, et vise plus particulièrement à proposer des modalités d'implantation à bord du giravion d'un tel groupe d'alimentation en carburant qui procurent une solution satisfaisante vis-à-vis d'un tel compromis.

Le giravion de la présente invention est équipé d'un groupe d'alimentation en carburant d'un groupe de motorisation du giravion comprenant au moins un moteur à combustion. Le giravion comporte un fuselage étendu longitudinalement entre l'avant et l'arrière du giravion et formé d'organes raidisseurs d'un revêtement. Les organes raidisseurs et le revêtement sont classiquement travaillants vis-à-vis des efforts généraux supportés par le fuselage.

Les organes raidisseurs comprennent au moins une succession longitudinale de cadres transversaux délimitant localement le profil transversal du fuselage et des raidisseurs longitudinaux du revêtement. Les organes raidisseurs comprennent aussi au moins un plancher supérieur en prise solidaire avec au moins deux dits cadres, dits cadres médians. De tels cadres médians sont compris dans un tronçon médian du fuselage interposé entre un poste de pilotage et une poutre de queue.

Ledit plancher supérieur est classiquement travaillant vis-à-vis des efforts généraux supportés par le fuselage, en étant porteur au moins d'un rotor principal à axe sensiblement vertical procurant au moins la sustentation du giravion.

Ledit groupe d'alimentation en carburant comprend au moins un ensemble d'alimentation en carburant d'un moteur du groupe de motorisation, le ou les dits au moins un ensemble d'alimentation en carburant comprenant chacun au moins :
-) un réservoir à carburant comprenant notamment au moins une poche à carburant. Ledit réservoir est installé à l'intérieur d'au moins un compartiment inférieur du fuselage situé sous un plancher médian. Un tel plancher médian est un plancher au moins de séparation entre le compartiment inférieur et au moins un compartiment supérieur formant un local habitable du giravion.
-) une nourrice noyée dans le réservoir. Ladite nourrice est équipée au moins d'un circuit d'approvisionnement en carburant depuis le réservoir et d'un circuit d'alimentation en carburant depuis la nourrice vers le moteur auquel est affecté l'ensemble d'alimentation en carburant.

Selon la présente invention, ledit plancher médian est monté en prise solidaire avec tout ou partie des cadres du tronçon médian, et tout au moins avec deux dits cadres médians en étant travaillant vis-à-vis des efforts généraux supportés par le fuselage. Le compartiment inférieur est exempt dudit revêtement à la face inférieure du fuselage. La face inférieure du fuselage est ouverte vers l'extérieur en ménageant un débouché du compartiment inférieur vers l'extérieur du fuselage. Le réservoir est porté en suspension à la face inférieure du plancher médian, ledit plancher médian formant en outre un organe d'ancrage par suspension du réservoir qui est accessible depuis l'extérieur du fuselage à travers ledit débouché.

La structuration du plancher médian en plancher travaillant vis-à-vis des efforts généraux supportés par le fuselage autorise un agencement avantageux des modalités de montage du groupe d'alimentation en carburant à bord du giravion. En effet, le débouché vers l'extérieur du compartiment inférieur est rendu possible à la face inférieure du fuselage libérée du revêtement.

L'accès à travers ledit débouché au compartiment inférieur et à des moyens d'ancrage par suspension du réservoir au plancher médian est aisé. Un tel accès aisé au compartiment inférieur facilite l'installation et/ou le retrait du réservoir par un opérateur, ainsi que les opérations de maintenance de l'ensemble d'alimentation en carburant.

La solution proposée par l'invention permet d'éviter, pour l'implantation du groupe d'alimentation en carburant à bord du giravion et notamment pour l'installation du réservoir dans le compartiment inférieur, un démontage et une réinstallation traditionnels au moins d'une trappe que comporte le plancher médian voire du plancher médian dans son ensemble, étant rappelé que le plancher médian est habituellement formé d'un plancher technique non travaillant.

En outre, l'opération d'installation à bord du giravion du groupe d'alimentation en carburant peut être effectuée sur une chaîne de montage du giravion indépendamment d'autres opérations d'assemblage des organes constitutifs du giravion.

Le maintien en conformation des cadres est procuré par leur partie supérieure comprise entre le plancher supérieur et le plancher médian, indépendamment d'un prolongement des cadres en zone inférieure depuis le plancher médian pour ménager une paroi latérale du fuselage notamment agencée en jupe délimitant le compartiment inférieur.

Le dit débouché peut être ménagé à la face inférieure du fuselage sans affecter la résistance des cadres vis-à-vis des efforts généraux globalement supportés par le fuselage.

En outre, les cadres et plus particulièrement les cadres en prise solidaire avec le plancher médian, peuvent être dispensés d'un bord transversal inférieur de rigidification de leur maintien en conformation. Il en découle que le volume intérieur du compartiment inférieur peut être libre de tout obstacle potentiellement formé d'un bord inférieur des cadres, ce qui permet d'agencer librement le réservoir à l'intérieur du compartiment inférieur suivant son extension longitudinale.

Le réservoir peut s'étendre de manière continue en une même poche le long du compartiment inférieur, en évitant la contrainte des moyens d'intercommunication entre différentes poches distinctes composant classiquement un même réservoir et individuellement disposées entre deux cadres longitudinalement voisins.

En outre, le circuit d'approvisionnement en carburant de la nourrice et/ou éventuellement au moins un circuit de transfert de carburant entre plusieurs réservoirs respectivement affectés à l'alimentation en carburant de différents moteurs du groupe de motorisation, peuvent être librement et aisément agencés en évitant notamment une fragilisation des cadres et en simplifiant les structures respectives des réservoirs et/ou desdits circuits.

En effet, la continuité longitudinale du volume intérieur du compartiment inférieur permet de préserver les cadres d'une fragilisation habituellement induite par des ouvertures ménagées à leur travers pour offrir des passages de carburant d'une zone à l'autre du compartiment inférieur délimitée entre deux cadres longitudinalement voisins, les cadres étant traditionnellement renforcés pour pallier une telle fragilisation.

Par ailleurs, l'ouverture de la face inférieure du fuselage pour ménager le débouché facilite la ventilation et le drainage du compartiment inférieur logeant le réservoir, ce qui permet d'accroître aisément la sécurisation du giravion vis-à-vis d'une échappée inopinée de gaz voire de carburant hors du réservoir.

Le compartiment inférieur est notamment délimité entre le plancher médian et une jupe latérale ménagée en soubassement du fuselage en prolongement du revêtement. Ces dispositions sont telles que ledit débouché est délimité entre des bords inférieurs libres de la jupe.

La jupe est notamment maintenue en conformation par des prolongements verticaux de montants latéraux des cadres médians depuis le plancher médian. La jupe est potentiellement munie d'organes de renfort à l'encontre d'un fléchissement de ses parois, notamment de ses parois longitudinales. De tels organes de renfort sont par exemple chacun agencés en caisson ménagé en bordure du débouché du compartiment inférieur sur l'extérieur du fuselage.

De tels prolongements des montants des cadres médians et/ou organes de renfort sont non travaillants vis-à-vis des efforts généraux supportés par le fuselage. Il en découle que lesdits prolongements peuvent être dispensés d'une ou de plusieurs traverses susceptibles de former un obstacle longitudinal inopportun dans le compartiment inférieur, tels que classiquement des bords transversaux inférieurs des cadres.

Le compartiment inférieur est de préférence équipé de moyens de stabilisation du maintien en suspension du réservoir par le plancher médian. De tels moyens de stabilisation sont avantageusement formés par des platines transversales ménagées à la base d'au moins un couple de dits cadres et emboîtées à l'intérieur de fentes que comporte la paroi supérieure du réservoir.

De telles platines, non travaillantes vis-à-vis des efforts généraux supportés par le fuselage, s'étendent potentiellement au moins partiellement, sinon suivant la totalité de la dimension transversale du fuselage reliant entre eux des montants transversalement opposés d'un même cadre.

Selon une forme de réalisation, lesdites fentes sont issues de la paroi supérieure du réservoir en ménageant un cloisonnement vertical du réservoir séparant son volume intérieur en une pluralité de chambres longitudinalement successives. Des passages de carburant entre deux chambres voisines d'un même réservoir peuvent être aisément ménagés en fond du réservoir à la base du cloisonnement. De telles dispositions permettent de ménager simplement des intercommunications entre les différentes chambres d'un même réservoir.

On relèvera que le réservoir peut être avantageusement rigidifié par les platines logées dans les fentes, lesdites platines formant des éléments de renfort évitant une déformation du réservoir potentiellement constitué d'une poche flexible.

Selon une forme préférée de réalisation, la nourrice est placée dans une chambre longitudinalement médiane du réservoir disposée entre deux cadres voisins. Ladite chambre longitudinalement médiane est préférentiellement ménagée sensiblement à l'aplomb de l'axe de rotation du rotor principal du giravion entre les deux dits cadres médians.

Conformément à une forme de réalisation selon laquelle le groupe d'alimentation en carburant comporte une pluralité de dits ensembles d'alimentation en carburant, les réservoirs respectifs desdits ensembles d'alimentation en carburant sont en communication fluidique entre eux par l'intermédiaire d'un circuit de transfert de carburant s'étendant transversalement entre les réservoirs en étant ménagé entre deux cadres voisins.

Un tel circuit de transfert de carburant peut être avantageusement ménagé entre les nourrices respectives des dits ensembles d'alimentation en carburant.

Le réservoir comporte de préférence une paroi de fond intégrant des pentes de drainage par gravité du carburant vers un débouché du circuit d'approvisionnement à travers lequel est prélevé le carburant pour son acheminement vers la nourrice, ledit débouché étant notamment ménagé par un éjecteur. De telles dispositions permettent de drainer la totalité du carburant à l'intérieur du réservoir vers le circuit d'approvisionnement en carburant, en évitant à cet effet un aménagement spécifique du compartiment inférieur.

Lesdites pentes sont par exemple ménagées par incorporation au réservoir de blocs de matériau cellulaire conférant à ladite paroi de fond une conformation localement pentue.

Le réservoir peut être indifféremment agencé en poche flexible ou en poche plus rigide ayant une tenue naturelle en conformation. En effet, l'accès depuis l'extérieur du giravion au compartiment inférieur procuré par son débouché autorise l'exploitation d'un réservoir rigide sans affecter l'aisance de son installation et/ou de son retrait.

Il est à relever que selon une forme de réalisation, la paroi inférieure du fuselage dans la zone du compartiment inférieur est potentiellement formée au moins en partie par une paroi de fond du réservoir clôturant le débouché, de sorte que le fond du réservoir est exploité pour former au moins en partie le ventre du giravion.

Selon une forme de réalisation, la paroi inférieure du fuselage dans la zone du compartiment inférieur est formée au moins en partie par une paroi amovible de fermeture du débouché, telle qu'agencée en capot. Il est bien évident qu'une telle paroi amovible est non travaillante vis-à-vis des efforts généraux supportés par le fuselage.

En cas de crash du giravion, le plancher médian constitue un bouclier de protection du compartiment supérieur à l'encontre d'une intrusion du réservoir et/ou des divers organes du groupe d'alimentation en carburant logés dans le compartiment inférieur.

Des moyens d'ancrage en suspension du réservoir sont avantageusement de structure simple, en étant par exemple formés d'organes d'accrochage solidaires du plancher médian et coopérant avec des sangles équipant le réservoir.

Selon une forme avantageuse de réalisation, les moyens d'ancrage sont potentiellement munis de moyens de rupture de la coopération entre les organes d'accrochage et les sangles, par exemple mis en oeuvre spontanément à un seuil d'effort prédéterminé et/ou par commande par le pilote du giravion d'une activation de tels moyens de rupture. De tels moyens de rupture sont potentiellement agencés en moyens connus de l'homme du métier et autorisent traditionnellement, en cas de crash du giravion, un largage d'un réservoir de carburant monté par exemple à l'extérieur du fuselage.

La face inférieure du compartiment inférieur étant ouverte sur l'extérieur, une mise en oeuvre de tels moyens de rupture autorise un largage du réservoir à travers ledit débouché opéré notamment en cas de crash du giravion.

Des exemples de réalisation de la présente invention vont être décrits en relation avec les figures des planches annexées, dans lesquelles :
- les fig.1 et fig.2 sont des illustrations d'un fuselage d'un giravion porteur en suspension d'une réserve de carburant selon un exemple de réalisation de l'invention, respectivement représenté en perspective et en coupe transversale médiane.
- la fig.3 est une illustration en vue de dessus d'une réserve de carburant composée de plusieurs réservoirs équipant le giravion représenté sur les fig.1 et fig.2.
- les fig.4 et fig.5 sont des illustrations partielles du fuselage du giravion représenté sur les fig.1 et fig.2 logeant en soubassement une réserve de carburant, respectivement en perspective écorchée et en coupe longitudinale.
- la fig.6 est une illustration' schématique d'une réserve de carburant équipant un giravion représenté sur les fig.1 et fig.2.

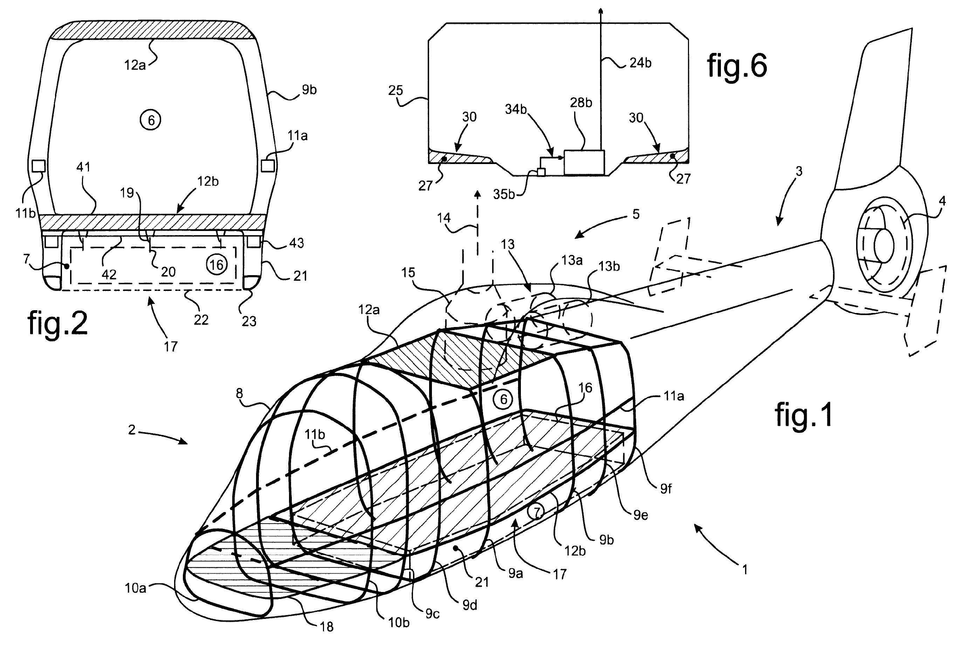

Sur la fig.1, un giravion 1 comprend longitudinalement un poste de pilotage 2 situé à l'avant et une poutre de queue 3 supportant un dispositif anti-couple arrière, tel qu'un rotor arrière 4 par exemple. Le poste de pilotage 2 et la poutre de queue 3 sont longitudinalement séparés l'un de l'autre par un tronçon médian 5 du fuselage du giravion 1. Le tronçon médian 5 est cloisonné par un plancher médian 12b ménageant un compartiment supérieur 6 formant un local habitable et un compartiment inférieur 7 formant un local technique.

Le fuselage du giravion 1 s'étend longitudinalement entre l'avant et l'arrière du giravion 1 et est principalement formé d'organes raidisseurs d'un revêtement 8. De tels organes raidisseurs et revêtement 8 sont communément travaillants vis-à-vis des efforts généraux supportés par le fuselage. Classiquement, les organes raidisseurs comprennent des cadres transversaux 9a-9f (9a, 9b, 9c, 9d, 9e, 9f) et 10a,10b par exemple, qui délimitent localement le profil transversal du fuselage du giravion 1 en étant successivement disposés longitudinalement à distance les uns des autres. Des raidisseurs longitudinaux 11a et 11b sont par exemple formés de lisses stabilisant le revêtement et/ou sont formés par des longerons.

Les organes raidisseurs comprennent aussi un couple de planchers 12a,12b en prise solidaire avec au moins deux cadres du tronçon médian 5, dits cadres médians 9a,9b. L'un desdits planchers est constitué du plancher médian 12b et l'autre desdits planchers est constitué d'un plancher supérieur 12a surplombant ledit plancher médian 12b au moins partiellement. L'extension longitudinale du plancher médian 12b est de préférence optimisée pour accroître au mieux le volume utile du compartiment inférieur 7.

Traditionnellement, le plancher supérieur 12a est porteur d'un rotor principal 14 à axe sensiblement vertical du giravion 1, notamment par l'intermédiaire d'une boîte 15 de transmission de puissance principale. Le giravion 1 est équipé d'un groupe de motorisation 13 comprenant au moins un moteur 13a,13b pour fournir au giravion la puissance mécanique nécessaire à son fonctionnement, et notamment la puissance mécanique nécessaire à l'entraînement des rotors 4,14.

Le groupe de motorisation 13 est couramment monté sur le plancher supérieur 12a. Sur l'exemple de réalisation illustré, le giravion 1 est équipé de deux moteurs 13a,13b. Il est cependant compris que l'invention est aussi applicable à un giravion monomoteur ou à un giravion équipé de plus de deux moteurs.

Sur l'exemple de réalisation illustré, le plancher médian 12b s'étend le long de la totalité du tronçon médian 5, en étant prolongé sous le poste de pilotage par un plancher technique 18 non travaillant vis-à-vis des efforts généraux supportés par le fuselage. Un tel plancher technique 18 est classiquement porté par des cadres 10a,10b du poste de pilotage 2, voire encore par un cadre avant 9c du tronçon médian 5, par l'intermédiaire d'organes de soutien non travaillants typiquement agencés en béquilles, en traverses et/ou en longerons par exemple.

Sur les fig.1 et fig.2, le compartiment inférieur 7 du fuselage est dédié à la réception d'une réserve de carburant 16 pour permettre l'alimentation en carburant du groupe de motorisation. Le plancher médian 12b est exploité pour porter par suspension la réserve de carburant 16 en permettant, en raison de son caractère travaillant, de dégager la face inférieure du fuselage du revêtement 8 afin de ménager un débouché 17 du compartiment inférieur 7 sur l'extérieur du giravion 1.

Sur la fig.2, la suspension au plancher médian 12b de la réserve de carburant 16 est réalisée par des moyens d'ancrage associant des organes d'accrochage 19 coopérant avec des sangles 20 équipant au moins un réservoir de la réserve de carburant 16. Les organes d'accrochage 19 sont en prise solidaire avec la face inférieure du plancher médian 12b, une telle prise solidaire étant potentiellement réalisée par intégration ou par fixation des organes d'accrochages 19 à la face inférieure du plancher médian 12b.

Le compartiment inférieur 7 est délimité entre le plancher médian 12b et une jupe 21 latérale du fuselage ménagée en prolongement vertical du revêtement 8. La jupe 21 est maintenue en conformation par les montants des cadres du tronçon médian 5, en étant munie d'organes de renfort 23 pour favoriser son maintien en conformation, notamment à l'encontre d'un fléchissement transversal. Les organes de renfort 23 sont agencés en caissons rapportés à la base de la jupe 21 en bordure du débouché 17 sur l'extérieur du compartiment inférieur 7. La jupe 21 est ouverte à sa face inférieure en délimitant entre ses bords libres inférieurs le débouché 17 du compartiment inférieur 7 sur l'extérieur du giravion. Ledit débouché 17 est potentiellement obturé par une paroi amovible 22 fixée de manière facilement réversible sur le fuselage. Une telle paroi amovible 22, non travaillante vis-à-vis des efforts supportés par le fuselage, est par exemple agencée en capot de clôture du débouché 17.

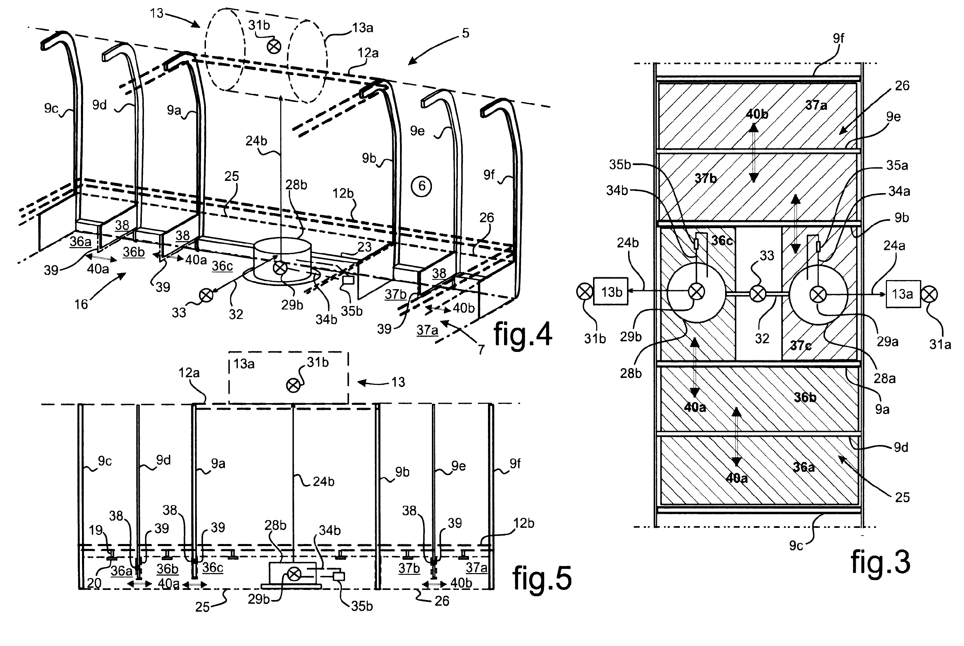

Sur les fig.3 à fig.5, les moteurs 13a,13b du groupe de motorisation 13 sont chacun alimentés en carburant depuis la réserve de carburant 16 par des circuits d'alimentation 24a,24b qui leur sont respectivement affectés.

Sur la fig.3, la réserve de carburant est subdivisée en plusieurs réservoirs 25,26 respectivement affectés à l'alimentation en carburant des moteurs 13a,13b par l'intermédiaire des circuits d'alimentation 24a,24b. La fig.3 illustre deux ensembles d'alimentation en carburant de moteurs 13a,13b respectifs du groupe de motorisation, tandis que les fig.4 et fig.5 illustrent en vue longitudinalement écorchée seulement l'un des dits ensembles d'alimentation en carburant.

Sur les fig.3 à fig.5, chaque ensemble d'alimentation en carburant d'un moteur 13a,13b donné comprend un réservoir 25,26 à l'intérieur duquel est logée une nourrice 28a,28b. Les réservoirs 25,26 sont chacun formés d'une poche unique. Un premier réservoir 25 s'étend depuis l'avant vers une zone longitudinalement médiane du compartiment inférieur 7 et un deuxième réservoir 26 s'étend depuis l'arrière vers la dite zone longitudinalement médiane du compartiment inférieur 7. Des moyens de stabilisation du maintien en suspension des réservoirs 25,26 sont ménagés en interposition entre les cadres 9a-9f et les réservoirs 25,26.

Plus particulièrement sur les fig.4 et fig.5, les cadres 9a-9f comportent chacun à leur base des platines 38 transversales coopérant par emboîtement avec des fentes 39 ménagées dans la paroi supérieure des réservoirs 25,26. De telles platines 38 logées dans les fentes 39 s'étendent verticalement et transversalement. Les fentes 39 sont issues de la paroi supérieure des réservoirs 25,26 en étant avantageusement formées par des renvois sur elle-même de la paroi supérieure des réservoirs 25,26.

Les fentes 39 forment des cloisonnements verticaux internes des réservoirs 25,26 subdivisant le volume d'un même réservoir 25,26 en une pluralité de chambres 36a,36b,36c ; 37a,37b,37c longitudinalement successives. L'étendue transversale des platines 38, voire encore des fentes 39, est potentiellement limitée, les platines ne constituant pas des organes travaillants de l'armature. De telles platines 38 et fentes 39 forment lesdits moyens de stabilisation du maintien en suspension des réservoirs 25,26.

Pour maintenir une libre circulation du carburant entre les différentes chambres 36a,36b,36c ; 37a,37b,37c d'un même réservoir 25,26, des passages 40a,40b de carburant entre les chambres sont ménagés à la base des réservoirs 25,26. A cet effet sur l'exemple de réalisation illustré, les platines 38 et les fentes 39 s'étendent partiellement suivant l'extension verticale des réservoirs 25,26 de sorte que lesdits passages 40a,40b sont ménagés entre la base des fentes 39 et le fond des réservoirs 25,26. Selon une autre forme de réalisation non représentée, lesdits passages 40a,40b sont formés par au moins un orifice et/ou un conduit ménagés à travers les platines 38 qui s'étendent jusqu'à la base des cadres 9a-9f.

Des intercommunications entre les différentes chambres 36a,36b,36c ; 37a,37b,37c d'un même réservoir 25,26 sont ainsi simplement ménagées par lesdits passages 40a,40b formés par des débouchés des chambres 36a,36b,36c ; 37a,37b,37c l'une sur l'autre ménagés à la base des réservoirs 25,26.

Des chambres médianes 36c,37c respectives des réservoirs 25,26 sont placées transversalement côte-à-côte sensiblement à l'aplomb du rotor principal, en logeant chacune la nourrice 28a,28b qui leur est affectée. Des pompes de gavage sont potentiellement noyées dans chacune des nourrices 28a,28b pour prélever le carburant et l'acheminer vers le moteur 13a,13b qui leur est affecté.

Des pompes d'approvisionnement 29a,29b sont exploitées pour approvisionner les nourrices 28a,28b en carburant, par l'intermédiaire de circuits d'approvisionnement 34a,34b mettant classiquement en oeuvre des éjecteurs 35a,35b noyés dans les réservoirs 25,26 respectivement affectés aux nourrices 28a,28b. Sur l'exemple de réalisation illustré, de telles pompes d'approvisionnement 29a,29b sont potentiellement formées par de dites pompes de gavage.

Des pompes d'alimentation 31a,31b des moteurs 13a,13b en carburant sont chacune entraînées par un moteur 13a,13b qui leur est affecté. Classiquement dans le cas d'une utilisation de dites pompes de gavage, les pompes d'alimentation 31a,31b relaient les pompes de gavage.

Les nourrices 28a,28b sont placées en communication fluidique entre elles par l'intermédiaire d'un circuit de transfert 32 mettant en oeuvre une pompe de transfert 33. Un tel circuit de transfert 32 est typiquement exploité pour transférer au besoin du carburant d'un ensemble d'alimentation affecté à un moteur 13a,13b vers un ensemble d'alimentation affecté à un autre moteur 13a,13b.

Il apparaît que l'architecture de montage à bord du giravion du groupe d'alimentation en carburant est de structure simple avec une capacité d'embarquement d'un volume optimisé de carburant. En outre, les avantages suivants sont notamment à relever :
-) la continuité du volume intérieur des réservoirs 25,26 est procurée par les intercommunications entre les chambres 36a,36b,36c ; 37a,37b,37c d'un même réservoir 25,26 agencées en dits passages 40a,40b de carburant ménagés à la base des moyens de stabilisation 38,39. Un tel agencement desdites intercommunications évite un affaiblissement des cadres 9a-9f libérés d'un bord inférieur en raison de la conception d'un plancher médian 12b travaillant. En effet tel que couramment pratiqué dans le domaine des giravions, les intercommunications usuelles entre différentes poches distinctes composant un même réservoir logé en soubassement du fuselage, impliquent une fragilisation des cadres et plus particulièrement de leur bord inférieur, les cadres devant en conséquence être renforcés.
- un accès au compartiment inférieur 7 est procuré depuis l'extérieur du fuselage à travers ledit débouché 17. Un tel accès facilite pour un opérateur un accès aux réservoirs 25,26 et aux différents circuits 24a,24b ;34a,34b ;32 que comprend le groupe d'alimentation en carburant. L'installation et la maintenance des réservoirs 25,26 en sont facilitées.
-) une ventilation du compartiment inférieur 7, et donc une sécurisation du giravion vis-à-vis de l'émission de gaz par le groupe d'alimentation en carburant, sont obtenues de manière simple grâce au débouché 17 du compartiment inférieur 7 sur l'extérieur du fuselage qui procure une telle ventilation. Le compartiment inférieur 7 peut être dispensé d'aménagements spécifiques pour sa ventilation.
-) au regard d'un simple plancher technique, l'espace habitable du giravion 1, comprenant le poste de pilotage 2 et le compartiment supérieur 6, est mieux protégé par le plancher médian 12b en cas de crash du giravion à l'encontre d'une intrusion des organes que comprend le groupe d'alimentation en carburant voire encore d'organes du giravion tels qu'un atterrisseur voire d'éléments extérieurs au giravion 1.

Sur la fig.2, le plancher médian 12b est par exemple formé de panneaux 41 travaillants portés par des traverses 42 travaillantes en prise solidaire avec les cadres du fuselage, tel que par l'intermédiaire de longerons 43 travaillants reliant les traverses 42 entre elles. Les panneaux 41 sont potentiellement fixés par rivetage sur lesdites traverses 42 et/ou sur lesdits longerons 43 en étant de préférence encastrés à leurs bords dans des goulottes ménagées au moins par les dites traverses 42 sinon aussi par lesdits longerons 43. Un tel encastrement des panneaux procure un renfort du plancher médian 12b favorisant sa résistance globale vis-à-vis des efforts généraux supportés par le fuselage et plus particulièrement vis-à-vis de la masse de carburant embarqué à bord du giravion 1 par suspension du ou des réservoirs 25,26.

Selon une forme de réalisation, lesdits panneaux 41 sont de préférence formés de panneaux stratifiés agencés en panneaux alvéolés armés par au moins une strate de renfort en matériaux composites intégrant des fibres multidirectionnelles noyées dans une matrice résineuse.

Sur la fig.6, un réservoir 25 d'un ensemble d'alimentation en carburant équipant un giravion 1 tel qu'illustré pour exemple sur la fig.1, est classiquement agencé en poche flexible. Le réservoir 25 intègre en son fond des blocs 27 de matériau cellulaire ménageant des pentes 30 de drainage du carburant vers l'éjecteur 35b du circuit d'approvisionnement 34b en carburant de la nourrice 28b qui lui est affectée.

On comprendra que les numéros de référence communs aux différentes figures sont correspondants à de mêmes organes du giravion et notamment du groupe d'alimentation en carburant dont il est équipé, de tels organes identifiés par lesdits numéros de référence communs étant potentiellement non représentés d'une figure à l'autre.

## Revendications

1. Giravion (1) équipé d'un groupe d'alimentation en carburant d'un groupe de motorisation (13) du giravion (1) comprenant au moins un moteur (13a,13b) à combustion, le giravion (1) comportant un fuselage étendu longitudinalement entre l'avant et l'arrière du giravion et formé d'organes raidisseurs d'un revêtement (8) comprenant au moins :
-) une succession longitudinale de cadres (9a-9f ; 10a, 10b) transversaux délimitant localement le profil transversal du fuselage et des raidisseurs longitudinaux (11a,11b) du revêtement (8), et
-) un plancher supérieur (12a) en prise solidaire avec au moins deux dits cadres, dits cadres médians (9a, 9b), que comprend un tronçon médian (5) du fuselage interposé entre un poste de pilotage (2) et une poutre de queue (3), ledit plancher supérieur (12a) étant porteur au moins d'un rotor principal (14) à axe sensiblement vertical procurant au moins la sustentation du giravion (1),
ledit groupe d'alimentation en carburant comprenant au moins un ensemble d'alimentation en carburant d'un moteur (13a,13b) du groupe de motorisation, ledit au moins un ensemble d'alimentation en carburant comprenant au moins :
-) un réservoir (25,26) à carburant installé à l'intérieur d'au moins un compartiment inférieur (7) du fuselage situé sous un plancher médian (12b) de séparation entre le compartiment inférieur (7) et au moins un compartiment supérieur (6) formant un local habitable du giravion (1),
-) une nourrice (28a,28b) noyée dans le réservoir (25,26), ladite nourrice (28a,28b) étant équipée au moins d'un circuit d'approvisionnement (34a,34b) en carburant depuis le réservoir (25,26) et étant équipée d'un circuit d'alimentation (24a,24b) en carburant du moteur (13a,13b) depuis la nourrice (28a,28b) vers le moteur (13a,13b) auquel est affecté l'ensemble d'alimentation en carburant,
**caractérisé en ce que** ledit plancher médian (12b) est un plancher travaillant monté en prise solidaire avec au moins les deux dits cadres médians (9a,9b), le compartiment inférieur (7) étant exempt dudit revêtement (8) à la face inférieure du fuselage qui est ouverte vers l'extérieur en ménageant un débouché (17) du compartiment inférieur (7) vers l'extérieur du fuselage, le réservoir (25,26) étant porté en suspension à la face inférieure du plancher médian (12b) qui forme un organe d'ancrage par suspension du réservoir (25,26), le réservoir (25,26) étant accessible depuis l'extérieur du fuselage à travers ledit débouché (17).

2. Giravion selon la revendication 1,
**caractérisé en ce que** le compartiment inférieur (7) est délimité entre le plancher médian (12b) et une jupe (21) latérale ménagée en soubassement du fuselage en prolongement du revêtement (8), ledit débouché (17) étant délimité entre des bords inférieurs libres de la jupe (21).

3. Giravion selon l'une quelconque des revendications 1 et 2,
**caractérisé en ce que** le compartiment inférieur (7) est équipé de moyens de stabilisation (38,39) du maintien en suspension du réservoir (25,26) par le plancher médian (12b).

4. Giravion selon la revendication 3,
**caractérisé en ce que** lesdits moyens de stabilisation sont formés par des platines (38) transversales ménagées à la base d'au moins un couple de dits cadres (9a-9f) et emboîtées à l'intérieur de fentes (39) que comporte la paroi supérieure du réservoir (25,26).

5. Giravion selon la revendication 4,
**caractérisé en ce que** lesdites fentes (39) sont issues de la paroi supérieure du réservoir (25,26) en ménageant un cloisonnement vertical du réservoir (25,26) séparant son volume intérieur en une pluralité de chambres (36a,36b,36c ;37a,37b,37c) longitudinalement successives, des passages (40a,40b) de carburant entre deux chambres (36a,36b,36c ;37a,37b,37c) voisines d'un même réservoir (25,26) étant ménagés en fond du réservoir (25,26) à la base du cloisonnement.

6. Giravion selon la revendication 5,
**caractérisé en ce que** la nourrice (28a,28b) est placée dans une chambre (36c,37c) longitudinalement médiane du réservoir (25,26) disposée entre deux cadres (9a,9b) voisins.

7. Giravion selon l'une quelconque des revendications 1 à 6,
**caractérisé en ce que** le groupe d'alimentation en carburant comportant une pluralité de dits ensembles d'alimentation en carburant, les réservoirs (25,26) respectifs desdits ensembles d'alimentation en carburant sont en communication fluidique entre eux par l'intermédiaire d'un circuit de transfert (32) de carburant s'étendant transversalement entre les réservoirs (25,26) en étant ménagé entre deux cadres (9a, 9b) voisins.

8. Giravion selon les revendications 6 et 7,
**caractérisé en ce que** ledit circuit de transfert (32) de carburant est ménagé entre les nourrices (28a,28b) respectives des dits ensembles d'alimentation en carburant.

9. Giravion selon l'une quelconque des revendications 1 à 8, **caractérisé en ce que** le réservoir (25,26) comporte une paroi de fond intégrant des pentes (30) de drainage par gravité du carburant vers un débouché du circuit d'approvisionnement (24a,24b) à travers lequel est prélevé le carburant pour son acheminement vers la nourrice (28a,28b).

10. Giravion selon la revendication 9,
**caractérisé en ce que** lesdites pentes (30) sont ménagées par incorporation au réservoir (25,26) de blocs (27) de matériau cellulaire conférant à ladite paroi de fond une conformation localement pentue.

11. Giravion selon l'une quelconque des revendications 1 à 10,
**caractérisé en ce que** la paroi inférieure du fuselage dans la zone du compartiment inférieur (7) est formée au moins en partie par une paroi de fond du réservoir (25,26) clôturant le débouché (17).

12. Giravion selon l'une quelconque des revendications 1 à 11,
**caractérisé en ce que** la paroi inférieure du fuselage dans la zone du compartiment inférieur (7) est formée au moins en partie par une paroi amovible (22) de fermeture du débouché (17).

13. Giravion selon l'une quelconque des revendications 1 à 12,
**caractérisé en ce que** le plancher médian (12b) constitue un bouclier de protection du compartiment supérieur (6) à l'encontre d'une intrusion du réservoir (25,26).

14. Giravion selon l'une quelconque des revendications 1 à 13,
**caractérisé en ce que** des moyens d'ancrage en suspension du réservoir sont formés d'organes d'accrochage (19) solidaires du plancher médian (12b) et coopérant avec des sangles (20) équipant le réservoir (25,26).

15. Giravion selon la revendication 14,
**caractérisé en ce que** les moyens d'ancrage sont munis de moyens de rupture de la coopération entre les organes d'accrochage (19) et les sangles (20), lesdits moyens de rupture autorisant un largage du réservoir (25,26) en cas de crash du giravion.

## Patentansprüche

1. Drehflügelflugzeug (1) mit einer Kraftstoffversorgungsgruppe einer Antriebsgruppe (13) des Drehflügelflugzeugs (1), welches mindestens einen Verbrennungsmotor (13a, 13b) aufweist, wobei das Drehflügelflugzeug (1) einen Rumpf aufweist, der sich in Längsrichtung zwischen dem Vorderteil und dem Heck des Drehflügelflugzeugs erstreckt und aus Verstärkungselementen einer Verkleidung (8) geformt ist, welcher mindestens aufweist:
-) eine Aufeinanderfolge in Längsrichtung von quer angeordneten Rahmen (9a-9f; 10a, 10b), die lokal das Querprofil des Rumpfes eingrenzen, und von Längsversteifungen (11a, 11b) der Verkleidung (8) und
-) eine obere Decke (12a), die mit mindestens zwei dieser Rahmen, genannt mittlere Rahmen (9a, 9b), fest verbunden ist, die einen Mittelabschnitt (5) des Rumpfes aufweist, der zwischen einer Flugkanzel (2) und einem Heckausleger (3) angeordnet ist, wobei die obere Decke (12a) mindestens einen Hauptrotor (14) mit im Wesentlichen vertikaler Welle, der mindestens den Auftrieb des Drehflügelflugzeugs (1) erzeugt, trägt,
wobei die Kraftstoffversorgungsgruppe mindestens eine Kraftstoffversorgungseinheit eines Motors (13a, 13b) der Antriebsgruppe aufweist, wobei mindestens eine Kraftstoffversorgungseinheit mindestens aufweist:
-) einen Kraftstofftank (25, 26), der im Inneren mindestens einer unteren Kammer (7) des Rumpfes installiert ist, die unter einem Zwischenboden (12b) zur Trennung zwischen der unteren Kammer (7) und mindestens einer oberen Kammer (6) angeordnet ist, die einen Passagierraum des Drehflügelflugzeugs bildet,
-) einen Verteiler (28a, 28b), der in dem Tank (25, 26) verlegt ist, wobei der Verteiler (28a, 28b) mit mindestens einem Kraftstoffzuführungskreis (34a, 34b) aus dem Tank (25, 26) versehen ist und mit einem Kraftstoffversorgungskreis (24a, 24b) des Motors (13a, 13b) von dem Verteiler (28a, 28b) zum Motor (13a, 13b), dem die Kraftstoffversorgungseinheit zugeordnet ist, ausgerüstet ist,
**dadurch gekennzeichnet, dass** der Zwischenboden (12b) ein lasttragender Zwischenboden ist, der mit mindestens den beiden besagten Mittelrahmen (9a, 9b) fest verbunden ist, wobei die untere Kammer (7) an der Unterseite des Rumpfes, die nach außen offen ist, indem sie eine Öffnung (17) der unteren Kammer (7) zum Äußeren des Rumpfes bildet, nicht mit der Verkleidung (8) versehen ist, wobei der Tank (25, 26) an der Unterseite des Zwischenbodens (12b) aufgehängt ist, ein Aufhängungsverankerungselement des Tanks (25, 26) bildet, wobei der Tank (25, 26) von außerhalb des Rumpfes durch die Öffnung (17) zugänglich ist.

2. Drehflügelflugzeug nach Anspruch 1,
**dadurch gekennzeichnet, dass** die untere Kammer (7) begrenzt ist zwischen dem Zwischenboden (12b) und einer seitlichen Schürze (21), die im Unterbau des Rumpfes in Verlängerung der Verkleidung (8) angeordnet ist, wobei die Öffnung (17) zwischen den unteren freien Rändern der Schürze (21) eingegrenzt ist.

3. Drehflügelflugzeug nach einem der Ansprüche 1 und 2,
**dadurch gekennzeichnet, dass** die untere Kammer (7) mit Stabilisierungsmitteln (38, 39) der Aufhängung des Tanks (25, 26) am Zwischenboden (12b) ausgerüstet ist.

4. Drehflügelflugzeug nach Anspruch 3,
**dadurch gekennzeichnet, dass** die Stabilisierungsmittel durch quer verlaufende Platten (38) gebildet werden, die an der Basis mindestens eines Paares der besagten Rahmen (9a-9f) angeordnet sind und in das Innere von Schlitzen (39), die die obere Wand des Tanks (25, 26) aufweist, eingefügt sind.

5. Drehflügelflugzeug nach Anspruch 4,
**dadurch gekennzeichnet, dass** die Schlitze (39) von der oberen Wand des Tanks (25, 26) ausgehen und eine vertikale Trennschottung des Tanks (25, 26) bilden, die dessen Innenvolumen in eine Mehrzahl von in Längsrichtung aufeinanderfolgende Kammern (36a, 36b, 36c; 37a, 37b, 37c) unterteilt, wobei Karaftstoffdurchgänge (40a, 40b) zwischen zwei benachbarten Kammern (36a, 36b, 36c; 37a, 37b, 37c) eines selben Tanks (25, 26) am Boden des Tanks (25, 26) am Fluß der Trennschottung angeordnet sind.

6. Drehflügelflugzeug nach Anspruch 5,
**dadurch gekennzeichnet, dass** der Verteiler (28a, 28b) in einer in Längsrichtung mittleren Kammer (36c, 37c) des Tanks (25, 26), die zwischen zwei benachbarten Rahmen (9a, 9b) angeordnet ist, plaziert ist.

7. Drehflügelflugzeug nach einem der Ansprüche 1 bis 6,
**dadurch gekennzeichnet, dass** die Kraftstoffversorgungsgruppe eine Mehrzahl von den genannten Kraftstoffversorgungseinheiten aufweist, wobei die jeweiligen Tanks (25, 26) der Kraftstoffversorgungseinheiten untereinander in Fluidverbindung stehen durch einen Kraftstoffverteilerkreis (32), der sich quer zwischen den Tanks (25, 26) erstreckt und zwischen zwei benachbarten Rahmen (9a, 9b) angeordnet ist.

8. Drehflügelflugzeug nach den Ansprüchen 6 und 7,
**dadurch gekennzeichnet, dass** der Kraftstoffverteilungskreis (32) zwischen den jeweiligen Verteilern (28a, 28b) der Kraftstoffversorgungseinheiten angeordnet ist.

9. Drehflügelflugzeug nach einem der Ansprüche 1 bis 8,
**dadurch gekennzeichnet, dass** der Tank (25, 26) einen Boden aufweist, in den Gefälle (30) zur Drainage des Kraftstoffs durch die Schwerkraft zu einem Ausgang des Versorgungskreises (24a, 24b) hin integriert sind, durch den der Kraftstoff zu seiner Weiterleitung zum Verteiler (28a, 28b) entnommen wird.

10. Drehflügelflugzeug nach Anspruch 9,
**dadurch gekennzeichnet, dass** die Gefälle (30) gestaltet sind durch die Eingliederung von Blöcken (27) aus Zellmaterial im Tank, die der Bodenwand ein örtliches Gefälle geben.

11. Drehflügelflugzeug nach einem der Ansprüche 1 bis 10,
**dadurch gekennzeichnet, dass** die untere Wand des Rumpfes in dem Bereich der unteren Kammer (7) mindestens teilweise durch eine Bodenwand des Tanks (25, 26) gebildet wird, die die Öffnung (17) verschließt.

12. Drehflügelflugzeug nach einem der Ansprüche 1 bis 11,
**dadurch gekennzeichnet, dass** die untere Wand des Rumpfes in dem Bereich der unteren Kammer (7) mindestens teilweise von einer abnehmbaren Wandung (22) zum Verschließen der Öffnung (17) gebildet wird.

13. Drehflügelflugzeug nach einem der Ansprüche 1 bis 12,
**dadurch gekennzeichnet, dass** der Zwischenboden (12b) ein Schutzschild der oberen Kammer (6) gegenüber einem Eindringen des Tanks (25, 26) darstellt.

14. Drehflügelflugzeug nach einem der Ansprüche 1 bis 13,
**dadurch gekennzeichnet, dass** die Aufhängungsverankerungsmittel des Tanks aus Ankopplungselementen (19) gebildet sind, die mit dem Zwischenboden (12b) fest verbunden sind und mit Gurten (20) zusammenwirken, mit denen der Tank (25, 26) ausgerüstet ist.

15. Drehflügelflugzeug nach Anspruch 14,
**dadurch gekennzeichnet, dass** die Verankerungsmittel mit Mitteln zum Bruch des Zusammenwirkens zwischen den Kopplungselementen (19) und den Gurten (20) versehen sind, wobei die Bruchmittel einen Abwurf des Tanks (25, 26) bei einem Crash des Drehflügelflugzeugs erlauben.

## Claims

1. A rotorcraft (1) equipped with a fuel feed unit for a power plant (13) of the rotorcraft (1) comprising at least one combustion engine (13a, 13b), the rotorcraft (1) comprising a fuselage extending longitudinally between the front and the rear of the rotorcraft and formed of stiffening elements for stiffening a covering (8), comprising at least:
- ) a longitudinal succession of transverse frames (9a- 9f; 10a, 10b) locally delimiting the transverse profile of the fuselage and the longitudinal stiffeners (11a, 11b) of the covering (8), and
- ) an upper floor (12a) securely engaged with at least two of said frames, referred to as median frames (9a, 9b), forming part of a median section (5) of the fuselage located between a cockpit (2) and a tail boom (3), said upper floor (12a) bearing at least one main rotor (14) with a substantially vertical axis providing at least the lift of the rotorcraft (1),
said fuel feed unit comprising at least one feed assembly for feeding fuel to an engine (13a, 13b) of the power plant, said at least one fuel feed assembly comprising at least:
- ) a fuel tank (25, 26) installed within at least one lower compartment (7) of the fuselage located beneath a separating median floor (12b) between the lower compartment (7) and at least one upper compartment (6) forming a habitable space of the rotorcraft (1),
- ) a feeder (28a, 28b) immersed in the tank (25, 26), said feeder (28a, 28b) being equipped at least with a supply circuit (34a, 34b) for supplying fuel from the tank (25, 26) and being equipped with a feed circuit (24a, 24b) for feeding the engine (13a, 13b) with fuel from the feeder (28a, 28b) to the engine (13a, 13b) with which the fuel feed assembly is associated,
**characterised in that** said median floor (12b) is a load-bearing floor mounted securely engaged with at least the two said median frames (9a, 9b), the lower compartment (7) being devoid of said covering (8) on the lower face of the fuselage which is open towards the outside by providing an opening (17) in the lower compartment (7) towards the outside of the fuselage, the tank (25, 26) being held suspended from the lower face of the median floor (12b) which forms a member for anchoring the tank (25, 26) by suspension, the tank (25, 26) being accessible from the outside of the fuselage via said opening (17).

2. A rotorcraft according to Claim 1,
**characterised in that** the lower compartment (7) is delimited between the median floor (12b) and a lateral skirt (21) formed in the substructure of the fuselage as an extension of the covering (8), said opening (17) being delimited between free lower edges of the skirt (21).

3. A rotorcraft according to any one of Claims 1 and 2,
**characterised in that** the lower compartment (7) is equipped with stabilisation means (38, 39) for stabilising the supporting of the tank (25, 26) in suspension by the median floor (12b).

4. A rotorcraft according to Claim 3,
**characterised in that** said stabilisation means are formed by transverse plates (38) formed at the base of at least one pair of said frames (9a-9f) and fitted into slots (39) in the upper wall of the tank (25, 26).

5. A rotorcraft according to Claim 4,
**characterised in that** said slots (39) start from the upper wall of the tank (25, 26), forming vertical partitioning of the tank (25, 26) dividing its internal volume into a plurality of longitudinally successive chambers (36a, 36b, 36c; 37a, 37b, 37c), passages (40a, 40b) for fuel to pass between two adjacent chambers (36a, 36b, 36c; 37a, 37b, 37c) of one and the same tank (25, 26) being formed in the bottom of the tank (25, 26) at the base of the partitioning.

6. A rotorcraft according to Claim 5,
**characterised in that** the feeder (28a, 28b) is placed in a longitudinally median chamber (36c, 37c) of the tank (25,26), which chamber is arranged between two adjacent frames (9a, 9b).

7. A rotorcraft according to any one of Claims 1 to 6,
**characterised in that**, the fuel feed unit comprising a plurality of said fuel feed assemblies, the respective tanks (25, 26) of said fuel feed assemblies are in fluid communication with one another by means of a fuel transfer circuit (32) extending transversely between the tanks (25, 26), being formed between two adjacent frames (9a, 9b).

8. A rotorcraft according to Claims 6 and 7,
**characterised in that** said fuel transfer circuit (32) is formed between the respective feeders (28a, 28b) of said fuel feed assemblies.

9. A rotorcraft according to any one of Claims 1 to 8,
**characterised in that** the tank (25, 26) comprises a bottom wall integrating slopes (30) for drainage by gravity of the fuel towards an opening of the supply circuit (24a, 24b) via which the fuel is taken in order to be delivered to the feeder (28a, 28b).

10. A rotorcraft according to Claim 9,
**characterised in that** said slopes (30) are formed by incorporating into the tank (25, 26) blocks (27) of cellular material which impart a locally sloping shape to said bottom wall.

11. A rotorcraft according to any one of Claims 1 to 10,
**characterised in that** the lower wall of the fuselage in the zone of the lower compartment (7) is formed at least in part by a bottom wall of the tank (25, 26) enclosing the opening (17).

12. A rotorcraft according to any one of Claims 1 to 11,
**characterised in that** the lower wall of the fuselage in the zone of the lower compartment (7) is formed at least in part by a removable wall (22) for closing the opening (17).

13. A rotorcraft according to any one of Claims 1 to 12,
**characterised in that** the median floor (12b) forms a shield protecting the upper compartment (6) against any intrusion of the tank (25, 26).

14. A rotorcraft according to any one of Claims 1 to 13,
**characterised in that** means for anchoring the tank in suspension are formed of attachment elements (19) secured to the median floor (12b) and cooperating with straps (20) fitted to the tank (25, 26).

15. A rotorcraft according to Claim 14,
**characterised in that** the anchoring means are provided with rupture means for rupturing the cooperation between the attachment elements (19) and the straps (20), said rupture means allowing the tank (25, 26) to be jettisoned in the event of the rotorcraft crashing.
